# EUROPEAN PATENT SPECIFICATION

(11) **EP 1 986 840 B1**
(45) Date of publication and mention of the grant of the patent: **26.11.2014**
(21) Application number: 06764118.3
(22) Date of filing: 10.07.2006
(51) Int. Cl.: B29C 65/74, B42C 15/00

(54) **MACHINE FOR COVERING VARIOUS TYPES OF ARTICLES**
MASCHINE ZUM BEDECKEN VERSCHIEDENER ARTEN VON ARTIKELN
MACHINE POUR COUVRIR DIFFERENT TYPES D'ARTICLES

(30) Priority: 20.02.2006 IT MI20060303
(43) Date of publication of application: 05.11.2008
(73) Proprietor: CoLibri' System S.p.A., 20129 Milano (IT)
(72) Inventor: FARNETI, Aldo, I-20146 Milano (IT)
(74) Representative: Mittler, Enrico
(86) International application number: PCT/EP2006/064045
(87) International publication number: WO 2007/096005

(56) References cited:
- EP-A2- 1 142 790
- EP-A2- 1 707 490
- EP-A2- 1 932 764
- WO-A-03/004282
- DE-A1- 4 132 681
- GB-A- 974 827
- US-A- 3 035 381
- US-A- 3 239 993
- US-A- 3 713 941
- US-A- 4 697 401

## Description

The present invention relates to a machine for covering various types of articles.

In the prior art machines are known for covering books with sheets of plastic material.

One of said machines is disclosed in patent application WO 03/004282. The machine comprises a sheet sealing and cutting assembly that cooperates with a work surface. The assembly comprises a first and a second element, of which at least the first element is movable with respect to the other and the two elements are arranged on opposite sides of the work surface. The first element comprises a sealing and cutting blade having an electric current that passes through it and the second element comprises a sealing and cutting counterblade. Driving means is provided for moving the sealing and cutting blade from a rest position to an operating position in which the sealing and cutting blade engages with the sealing and cutting counterblade. The first element and the driving means belong to a unit connected to the work surface in a removable manner. The unit furthermore comprises elastic retaining means for retaining said blade in the rest position.

The plastic sheets that are used for covering the cover of a book are only single sheets of plastic as the machine does not accept a continuous single sheet of plastic material.

In this way, the operation of covering the numerous articles becomes tiresome for the user, who has to load a single sheet of plastic material for each operation.

Furthermore, the operation becomes costly, as the remaining part of the individual sheet of plastic material is no longer usable for covering another articles.

US-A-3 713 941 discloses a machine for covering articles with sheets of plastic material as recited in the preamble of claim 1.

EP 1707490 discloses a packaging method and apparatus wherein each product is packaged by enveloping the product in flexible packaging material. A programmed microprocessor calculates the length of flexible packaging material needed to package the product based on the physical dimensions of the product, calculates the weight of the flexible packaging material needed, and calculates a total package weight as the sum of the weight of the product and the calculated weight of the flexible packaging material. A printer prints information specific to the product that is being packaged onto a label that is then affixed to the flexible packaging material prior to the product being packaged. The information can be a function of the package weight, and the calculated total package weight can be communicated from the microprocessor to the printer. Finally, the product is packaged in the flexible packaging material having the label already affixed thereto.

EP 1932764 discloses an apparatus for packaging products which comprises: a pair of opposed rollers forming a nip therebetween for receiving a pair of opposing upper and lower webs of flexible packaging material along with a product to be packaged disposed between the webs, facing surfaces of the webs having sealing material for sealing the webs together; an infeed bed located upstream of the nip, the lower web being supported by the infeed bed such that a product to be packaged can be placed onto the lower web on the infeed bed; and an infeed gate disposed between the infeed bed and the nip, the infeed gate being movable between a blocking position adjacent the lower web such that the infeed gate blocks passage of a product into the nip, and an unblocking position spaced from the lower web such that the infeed gate allows passage of a product into the nip.

In view of the prior art, the object of the present invention is to provide a portable machine for covering various types of articles that overcomes the aforementioned drawbacks.

According to the present invention, this object is achieved by means of a portable machine for covering articles with sheets of plastic material, as defined in claim 1.

The features of the present invention will become clearer from the following description of embodiments thereof illustrated by way of non-limitative example in the attached drawings, in which:
Figures 1-5 show the portable machine for covering various types of articles in various operating steps according to a first embodiment of the present invention;
Figure 6 is an exploded view of a part of the machine in figure 1;
Figure 7 is a portable machine according to a second embodiment of the invention;
Figure 8 is a portable machine according to a third embodiment of the invention;
Figure 9 is a schematic section view of the machine in figure 7.

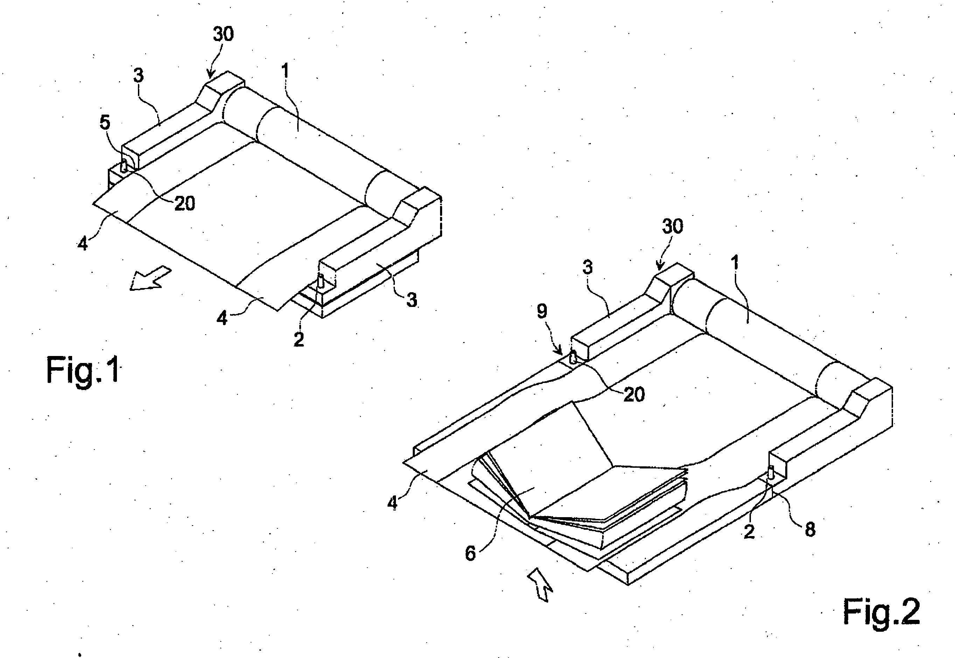

With reference to figures 1-5 there is shown a machine for covering articles according to the first embodiment of the present invention. This machine uses a roll 1 of a continuous sheet of flexible plastic material of which successive portions of sheet suitable for covering articles of different type and in particular the covers of the books can be taken, and comprises a work plane or surface 2. The roll 1 is arranged adjacent the rear part 15 of the work plane 2.

The machine comprises means 30 for positioning the roll of the continuous sheet of plastic material; said positioning means 30 are integral with the work surface 2.

The work plane 2 comprises, on opposite side ends, protrusions 3 suitable for guiding the sheet of plastic material that is unwindable from the roll 1 (figure 1). The roll 1 does not have a structural core in cardboard or another material; the plastic material of the roll 1 has side flaps 4 between which the cover of an article, for example a book, is deposited, that have to face upwards. Preferably, as shown in figures 1-5, the positioning means 30 are extensions of the protrusions 3.

The removed border of the sheet of plastic material must emerge from the work plane 2 at a distance that is such as to enable the book 6 (figure 2) to be positioned. The sheet of plastic material has to be arranged in slits 5 formed between the protrusions 3 and the work plane 2.

Preferably, the work plane 2 has an additional work plane 7, preferably hinged at 8 on the work plane 2, where the book 6 with the cover arranged inside a flap 4 of the sheet of plastic material is positioned.

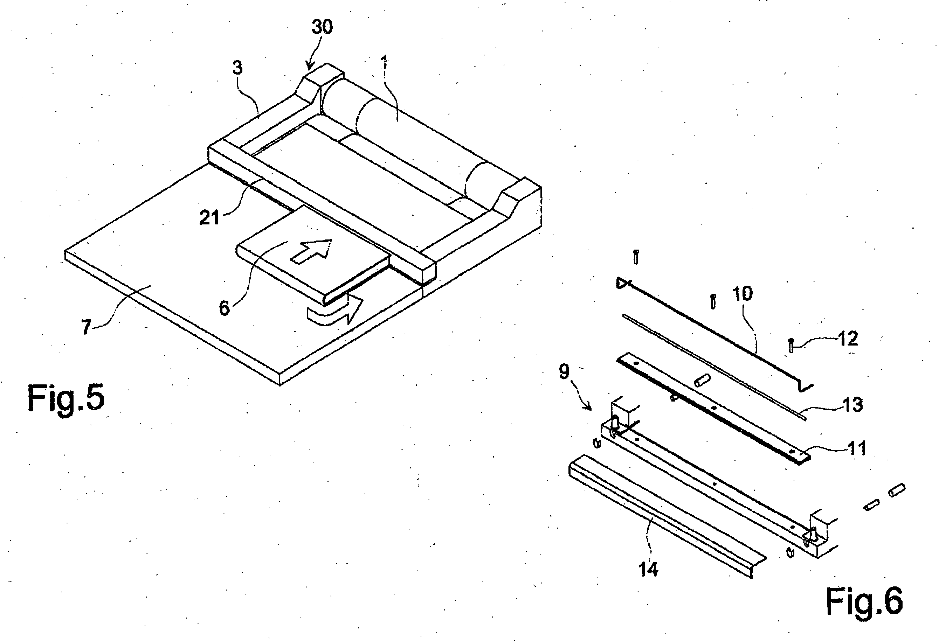

In the front end 9 of the work plane 2, in the zone adjacent the end of the protrusions 3, there is a hot sealing and cutting blade 10 that is visible in figure 6. The blade 10 is arranged on a brass seat 11 fixed to the work plane 2 by means of screws 12; a layer of Teflon 13 is arranged between the blade 10 and the brass seat 11 and the blade 10 itself is covered by a further layer of Teflon 14. Electric current generated by an appropriate power supply unit that is not visible in the figures is passed through the blade 10.

On pins 20 arranged adjacent the ends of the blade 10 a welding and cutting counterblade 21 is suitable for engaging. The pins 20 also act as guides for the counterblade 21.

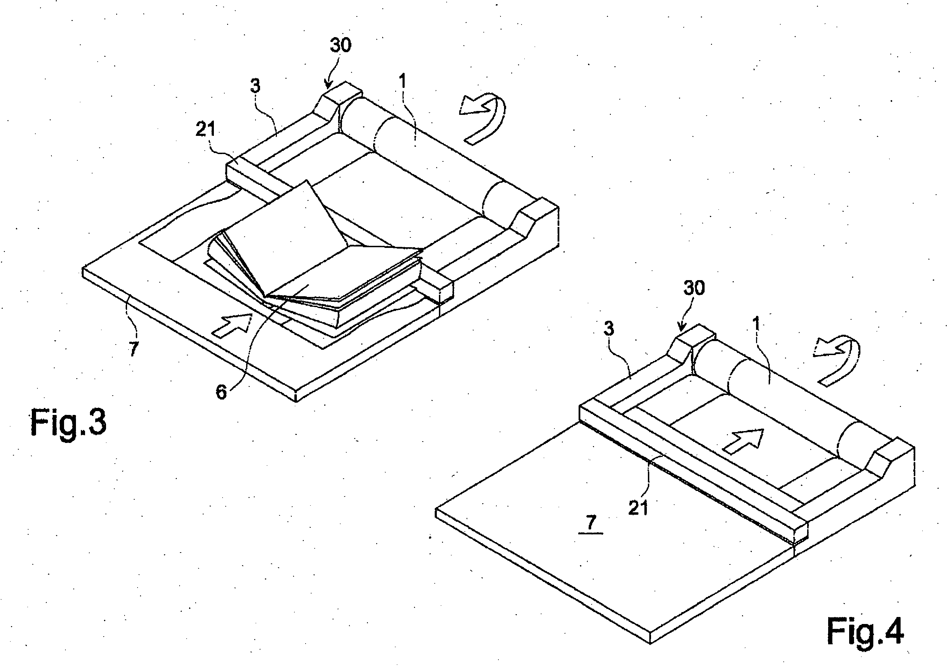

For cutting the sheet of plastic material, the roll 1 is rewound until it reaches the cutting zone of the sheet of plastic material. Subsequently, the counterblade 21 engages with the blade 10 in an operating or cutting position; lastly, the cut is performed by arranging the counterblade 21 on the coupling and guide pins 20 and exerting even pressure on the counterblade 21 (figure 3) towards the blade 10.

Subsequently, the roll 1 is rewound, but not completely, so as not to make the sheet of plastic material emerge from the slits 5, of the guides 3 (figure 4). In this way the work plane 2 is kept free for subsequent cuts of the sheet of plastic (figure 5).

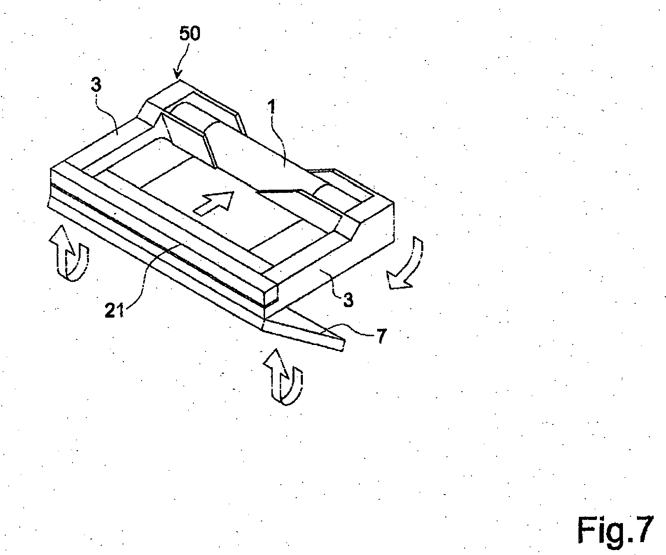

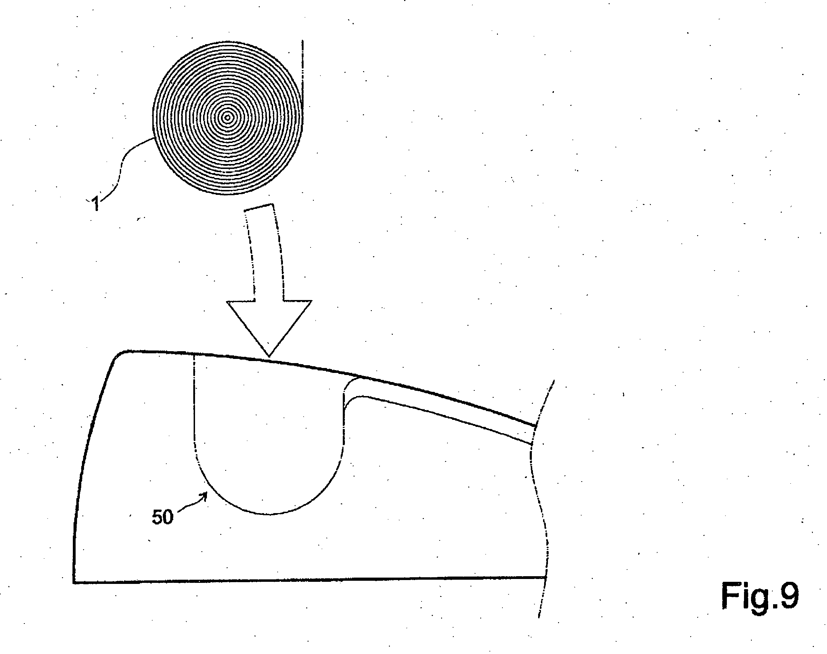

Figures 7 and 9 show a second embodiment of the machine for covering various types of article according to the invention. The only difference between said machine with respect to the features of the machine in figures 1-6 consists in that said positioning means comprise a gap 50 suitable for receiving the roll 1 of plastic material. Said gap is integral with the work plane 2.

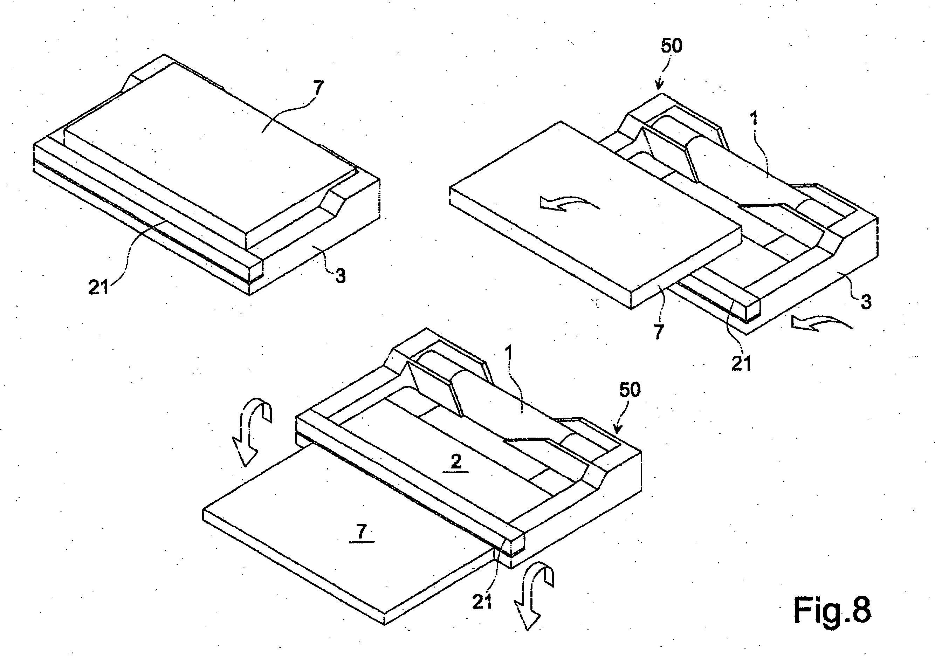

In figure 8 there is shown a third embodiment of the machine for covering various types of articles according to the invention. The machine in figure 8 differs from the machine in figure 7 because the additional plane 7 is not hinged on the plane 9 but is detached therefrom to act as a closing element of the machine.

## Claims

1. Portable machine for covering articles (6) with sheets of plastic material (1), said machine comprising means (10, 21) suitable for cutting and sealing the sheets that cooperate with a work plane (2), positioning means (30,50) suitable for arranging a roll (1) of a continuous sheet of plastic material in a position suitable for unrolling subsequent portions of said continuous sheet and placing them on said work plane (2), **characterised in that** it comprises side guides (3) of the continuous sheet of plastic material, said side guides (3) comprising slits (5) for inserting the continuous sheet of plastic material.

2. Portable machine according to claim 1, **characterised in that** said positioning means (30,50) are connected integrally with said work plane (2).

3. Portable machine according to claim 1 or 2, **characterised in that** said side guides (3) of the sheet of plastic material are connected integrally to said positioning means (30, 50) of the roll.

4. Portable machine according to claim 1, **characterised in that** said positioning means comprises a cavity (50) for housing the roll (1).

## Patentansprüche

1. Tragbares Gerät zum Einhüllen von Artikeln (6) mit Bögen aus Kunststoffmaterial (1), wobei das Gerät Mittel (10, 21) zum Schneiden und Versiegeln der Bögen, die mit einer Arbeitsebene (2) zusammenwirken, und Positionierungsmittel (30, 50) zum Anordnen einer Rolle (1) mit einer Bahn aus Kunststoffmaterial in einer Position, die zum Abrollen folgender Abschnitte der Bahn und Platzieren derselben auf der Arbeitsebene (2) geeignet ist, aufweist,
**dadurch gekennzeichnet,**
**dass** das Gerät Seitenführungen (3) der Bahn aus Kunststoffmaterial aufweist, wobei die Seitenführungen (3) Schlitze (5) zum Einführen der Bahn aus Kunststoffmaterial aufweisen.

2. Tragbares Gerät gemäß Anspruch 1, **dadurch gekennzeichnet,**
**dass** die Positionierungsmittel (30, 50) integral mit der Arbeitsebene(2) verbunden sind.

3. Tragbares Gerät gemäß Anspruch 1 oder 2, **dadurch gekennzeichnet,**
**dass** die Seitenführungen der Bahn aus Kunststoffmaterial integral mit den Positionierungsmitteln (30, 50) der Rolle verbunden sind.

4. Tragbares Gerät gemäß Anspruch 1, **dadurch gekennzeichnet,**
**dass** die Positionierungsmittel einen Hohlraum (50) zum Aufnehmen der Rolle (1) aufweist.

## Revendications

1. Machine portative pour recouvrir des articles (6) de feuilles de matière plastique (1), ladite machine comprenant des moyens (10, 21) aptes à couper et souder les feuilles qui coopèrent avec un plan de travail (2), des moyens de positionnement (30, 50) aptes à disposer un rouleau (1) d'une feuille continue de matière plastique dans une position permettant de dérouler des parties ultérieures de ladite feuille continue et de les placer sur ledit plan de travail (2), **caractérisée en ce qu'**elle comprend des guides latéraux (3) de la feuille continue de matière plastique, lesdits guides latéraux (3) comprenant des fentes (5) pour insérer la feuille continue de matière plastique.

2. Machine portative selon la revendication 1, **caractérisée en ce que** lesdits moyens de positionnement (30, 50) sont reliés d'un seul tenant audit plan de travail (2).

3. Machine portative selon la revendication 1 ou 2, **caractérisée en ce que** lesdits guides latéraux (3) de la feuille de matière plastique sont reliés d'un seul tenant auxdits moyens de positionnement (30, 50) du rouleau.

4. Machine portative selon la revendication 1, **caractérisée en ce que** lesdits moyens de positionnement comprennent une cavité (50) pour loger le rouleau (1).
